# EUROPÄISCHE PATENTSCHRIFT

(11) **EP 0 672 080 B1**
(45) Veröffentlichungstag und Bekanntmachung des Hinweises auf die Patenterteilung: **30.07.1997**
(21) Anmeldenummer: 94900626.6
(22) Anmeldetag: 06.12.1993
(51) Int. Cl.: C08J 7/04, C08L 3/02, B05D 3/00

(54) **VERFAHREN ZUR HERSTELLUNG VON VERROTTBAREN, DÜNNWANDIGEN FORMKÖRPERN AUF STÄRKEBASIS**
PROCESS FOR PRODUCING BIODEGRADABLE THIN-WALLED STARCH-BASED MOULDINGS
PROCEDE PERMETTANT DE FABRIQUER DES CORPS MOULES A PAROI FINE, BIODEGRADABLES, A BASE D'AMIDON

(30) Priorität: 04.12.1992 AT 2402/92
(43) Veröffentlichungstag der Anmeldung: 20.09.1995
(73) Patentinhaber: FRANZ HAAS WAFFELMASCHINEN INDUSTRIEGESELLSCHAFT M.B.H., A-1210 Wien (AT)
(72) Erfinder: HAAS, Franz, A-1210 Wien (AT); HAAS, Johann, A-3400 Klosterneuburg (AT); TIEFENBACHER, Karl, A-1170 Wien (AT)
(74) Vertreter: Berger, Erhard, Dr.
(86) Internationale Anmeldenummer: AT9300185
(87) Internationale Veröffentlichungsnummer: WO9413734

(56) Entgegenhaltungen:
- EP-A- 0 444 880
- WO-A-90/01043
- WO-A-91/12186
- H. Kittel, "Lehrbuch der Lacke und Beschichtungen", Bd.I,Tl.1, Verlag W.A. Colomb, 1971, S. 58-64,122-125,271-273

## Beschreibung

Die vorliegende Erfindung hat sich zum Ziel gesetzt, Formkörper, wie Becher, Teller, Tassen, Schachteln, generell Behältnisse verschiedenster Art, aber auch Blätter, Matten und Folien bereitzustellen, die einerseits verrottbar und andererseits zumindest im Kontaktbereich mit den aufzunehmenden Produkten wasserabweisend bis wasserdicht sind.

Eine Vielzahl solcher Produkte wird heute aus nicht erneuerbaren Rohstoffen unter Anwendung störfallgefährdeter Techniken hergestellt und erhöht nach ihrer Verwendung das Volumen an langlebigen festen Abfällen. Die daraus resultierenden Rohstoff-, Umwelt- und Entsorgungsprobleme machen die Notwendigkeit alternativer, ökologisch besser verträglicher Produkte deutlich. So werden beispielsweise bei Lebensmitteln, insbesondere bei solchen, die zum sofortigen Verzehr bestimmt sind, häufig voluminöse, dauerhafte Kunststoffverpackungen verwendet. Obwohl gewichtsmäßig relativ leicht, beanspruchen sie doch erhebliches Volumen im Müllbehälter und auf den Deponien bzw. werden mitunter durch den Wind weggetragen. Auch wenn diese beim Verzehr im Freien einfach weggeworfen werden, verunzieren sie oft jahrelang unsere Umgebung. Neben dieser Entsorgungsproblematik sind hier auch der Verbrauch knapper werdender fossiler Rohstoffe sowie die Transport- und Produktionsrisiken von Bedeutung.

Für einen Ersatz fossiler Rohstoffe in der Materialherstellung und die Erzeugung verrottbarer Produkte kommen im Prinzip verschiedene nachwachsende Rohstoffe in Frage, die überwiegend den Stoffgruppen Kohlenhydrate, Fette, Proteine angehören. Während niedermolekulare Kohlenhydrate ("Zucker), Fette und Proteine überwiegend für Nahrungszwecke verwendet werden, stehen bei den Polysacchariden, wie etwa bei Cellulose oder bei der schnell nachwachsenden Stärke erhebliche Produktionskapazitäten und auch Reserven zur Verfügung um fossile Rohstoffe substituieren zu können.

Was Stärke als Basismaterial betrifft, sind erst in den letzten Jahrzehnten eine Reihe von Verpackungsprodukten entwickelt worden. Solche Formkörper werden z.B. durch Backen zwischen zwei Formhälften oder durch Extrudieren von stärkehaltigen Massen hergestellt.

Formkörper, die durch Backen von stärkehaltigen Massen zwischen zwei Formhälften erhalten werden, sind in der WO-A-91/12186 beschrieben.

Das dort beschriebene Verfahren besteht darin, daß man, um ein zähes, festes, hohe mechanische Stabilität aufweisendes Produkt zu erhalten
1) eine aus folgenden Ingredienzien bereitete, im wesentlichen fettfreie Backmasse einsetzt:
   a) 30 bis 63 Gew.-% vorzugsweise 42,0 bis 58,0 Gew.-% Wasser;
   b) als Stärkebasis 27,0 bis 69 Gew.-%, vorzugsweise 36 bis 56,5 Gew.-%, insbesondere 44 bis 49 Gew.-% einer Stärke oder eines Gemisches verschiedener Stärken und/oder eines Mehles oder Mehlgemisches;
   c) als Trennmittel 0,04 bis 11 Gew.-%, vorzugsweise 0,2 bis 4,5 Gew.-% einer oder mehrerer mittel- oder langkettiger, gegebenenfalls substituierter Fettsäuren und/oder deren Salze und/oder deren Säurederivate, z.B. Säureamide - gegebenenfalls können neben diesen Verbindungen oder als teilweiser, in Einzelfällen auch als vollständiger Ersatz derselben 0,5 bis 6,5 Gew.-%, vorzugsweise 0,1 bis 4,2 Gew.-% Polymethylhydrogensiloxane eingesetzt werden, wobei im Falle des Einsatzes beider Verbindungsgruppen bei hohen Konzentrationen an Fettsäuren bzw. deren Verbindungen die Konzentration an Polymethylhydrogensiloxanen in der Regel 3 Gew.-% nicht überschreiten soll -;
   d) 0 bis 10 Gew.-%, vorzugsweise 0,1 bis 7,5 Gew.-% eines Verdickungsmittels, insbesondere 1,0 bis 5,5 Gew.-% Quellstärke, vorverkleisterte Stärke od. Backabfall, und/oder 0 bis 2 Gew.-%, vorzugsweise 0 bis 1,0 Gew.-% Guar-Mehl, Pektin, Johannisbrotkernmehl, Carboxymethylcellulose und/oder 0 bis 5,5 Gew.-%, vorzugsweise 0 bis 3 Gew.-% Gummi arabicum;
   e) 0 bis 16,0 Gew.-%, vorzugsweise 0 - 11 Gew.-% cellulosereiche Rohstoffe - im Falle von Pulpe bis 26,9 Gew.-% - und/oder andere pflanzliche Faserstoffe und/oder Fasern aus Kunststoff, Glas, Metall, Kohlenstoff u.a.;
   f) 0 bis 10 Gew.-%, vorzugsweise 0 bis 7,5 Gew.-% nicht faserförmige Füllstoffe, wie Calciumcarbonat,
      Kohle,
      Talkum,
      Titandioxid,
      Kieselgel,
      Aluminiumoxid;
      0 bis 3 Gew.-%, vorzugsweise 0 bis 2,5 Gew.-% Schellack
      0 bis 2,0 Gew.-%, vorzugsweise 0 bis 1,0 Gew.-% Sojaeiweiß, pulv., Weizenkleber, pulv., Hühnereiweiß, pulv., Casein, pulv. und Caseinat, pulv.;
   g) als Feuchthaltemittel
      0-3,5 Gew.-%, vorzugsweise 0-2,5 Gew.-% Kochsalz, und/oder
      0-2,5 Gew.-%, vorzugsweise 0-1,5 Gew.-% Glycerin, Glykole und/oder
      0-4,5 Gew.-%, vorzugsweise 0-3,5 Gew.-% Sorbit
   h) als Färbemittel
      0-10 Gew.-%, vorzugsweise 0-7,5 Gew.-% anorganische Pigmente, und/oder
      0-0,1 Gew.-% natürl. u. synthet. Farbstoffe, und/oder
      0-2,5 Gew.-%, vorzugsweise 0-1 Gew.-% Zuckercouleur, und/oder
      0-1 Gew.-% Ruße und/oder
      0-3,5 Gew.-%, vorzugsweise 0-2,5 Gew.-% Kakaopulver;
   i) als Strukturverfestiger eine Zirkoniumsalzlösung, bevorzugt als alkalische Lösung von Ammoniumzirkoniumcarbonat, wobei der Gehalt an Zirkoniumverbindungen, ausgedrückt als ZrO₂ 0 bis 0,1 Gew.-%, bevorzugt 0,01 bis 0,05 Gew.-% beträgt;
   k) 0-0,25 Gew.-%, vorzugsweise 0-0,1 Gew.-% Konservierungsmittel und
   l) 0-0,5 Gew.-%, vorzugsweise 0-0,1 Gew.-% Antioxidantien;
2) die die Form ausfüllende Backmasse 25 bis 230 sec. lang bei 145 - 230°C ausbackt, und
3) das erhaltene Produkt durch Konditionieren auf einen Feuchtigkeitsgehalt von 6 Gew.-% bis 22 Gew.-% einstellt.

Inzwischen wurde gefunden, daß man dieses Verfahren in zweierlei Hinsicht modifizieren kann:
1) Man kann neben oder anstelle von Stärke mindestens eine modifizierte Stärke ausgewählt aus der Gruppe bestehend aus: mit organischen Säuren oder mit Phosphorsäure veresterte Stärke, veretherte Stärke, vernetzte Stärke und durch ionische Wechselwirkung modifizierbare Stärke einsetzen. Diese Maßnahme führt zu einer deutlichen Stabilitätsverbesserung der Formkörper.
   Als veresterte Stärke kann eine Stärke eingesetzt werden, die mit Essigsäure, Bernsteinsäure oder alkenylsubstituierter Bernsteinsäure oder mit Phosphorsäure verestert ist.
   Als veretherte Stärke wird eine Hydroxyethylstärke oder Hydroxypropylstärke eingesetzt.
   Als vernetzte Stärke wird eine Stärke mit Phosphatvernetzung oder Dicarbonsäurevemetzung oder Glycerinvernetzung eingesetzt.
   Zur Erzielung einer ionischen Wechselwirkung wird der Stärke Aluminiumsulfat, Alkalisilikate, Dicalciumphosphat oder Calciumsilikat zugesetzt.
2) Man kann aber auch den Anteil der relativ teuren Stärke deutlich herabsetzen.
   Der Mitverwendung von hydrophilen Faserstoffen, wie z.B. Cellulose u.ä., waren bisher dadurch Grenzen gesetzt, daß diese ein Mehrfaches (5 - 10faches) an Wasser binden, dessen Verdampfung den Strukturbildungsprozeß stört. Andererseits sind die strukturverstärkenden Wirkungen der Faserstoffe erwünscht. Ein Weg diesen Wasserbedarf etwas zu reduzieren ist die Verwendung von Altfasem oder hydrophobierten Fasern (chemisch modifizierter Zellstoff, Naturfasem - z.B. Flachskurzfasem).
   Es hat sich nun überraschenderweise gezeigt, daß größere Anteile an hydrophilen, pflanzlichen Fasern, wie Cellulose, Hemicellulose, Kartoffelfasern, Rübenschnitzel u.ä., ja selbst mehr Fasern als Stärke dann eingesetzt werden kann, wenn die pulverförmigen Fasern trocken mit dem Trennmittel - hier kommen nur pulverförmige Trennmittel in Frage - vorgemischt werden.
   Der Trennmittelanteil sollte dabei mindestens 5 Gewichtsprozent, maximal 26 Gewichtsprozent, vorzugsweise 10 - 20 Gewichtsprozent des Celluloseanteils betragen.
   Durch diese Vorgangsweise ergeben sich - bei sonst gleicher Art und Weise der Backmassenbereitung
   1. Wasser
   2. Füllstoffe, Stärke, vorgemischt mit Verdickungsmittel
   3. Mischung - Faserstoff/Trennmittel
   zwei signifikante Unterschiede:
   1. Der Wasserbedarf für den Faserstoff wird reduziert und beträgt weniger als das 4-fache des Faserstoffgewichts.
   2. Der Kontaktwinkel der Backmasse bei der Dosierung in die Backformen ist erhöht.

   Beides sind Voraussetzungen bzw. Indikatoren für eine gleichmäßige Strukturbildung durch nicht zu frühes, gleichmäßiges Verdampfen nicht zu großer Wassermengen.

Alle diese Formkörper weisen eine poröse Struktur auf und besitzen eine optisch weitgehend geschlossene, jedoch Mikroporen enthaltende Oberfläche, die überwiegend durch das Vorliegen amorpher, thermisch denaturierter, das heißt, nicht mehr in ihrer nativen, granulären und teilkristallinen Form vorliegender, Stärke und gegebenenfalls Cellulosefasern gekennzeichnet ist.

Die genannten Formkörper können auch durch Extrudieren von stärkehaltigen Massen erhalten werden. Solche Formkörper werden durch Verarbeiten einer thermoplastischen Masse, welche aus Stärke, Stärkederivaten oder stärkereichen Mehlen unter Mitverwendung von plastifizierend wirkenden Stoffen wie Wasser, Glycerin, und anderen Polyolen sowie verschiedenen Kleinzutaten in einem Misch- und Knetextruder erzeugt wurde, hergestellt. Diese Herstellungsprinzipien sind beispielsweise in der Anmeldung WO 9005161 sowie in der EP-A1 118240, in den Anmeldungen WO 9102024 und WO 9102025, sowie in der US-PS 5095054 erläutert. In diesen Literaturstellen sind solche aus vorerst thermoplastisch gemachter Stärke hergestellte Materialien beschrieben, die neben einem Anteil von Stärke(derivaten) in unterschiedlichen Konzentrationen zumeist noch Anteile anderer Natur- und Kunststoffe enthalten.

Die erhaltenen stärkereichen thermoplastischen Massen werden entweder direkt oder nach Herstellen eines meist in granulierter Form vorliegenden Zwischenproduktes zu Formkörpern verarbeitet. Dies geschieht mit bekannten Methoden der Verarbeitung von Thermoplasten wie Schäumen, Spritzgießen, Formblasen, Folienextrusion.

Diese Formkörper weisen eine optisch weitgehend geschlossene Oberfläche auf, die durch das überwiegende Vorliegen amorpher, thermisch denaturierter, das heißt nicht mehr in ihrer nativen granulären und teilkristallinen Form vorliegender Stärke gekennzeichnet ist.

Die WO 90/01043 schlägt zur Beschichtung solcher hydrophiler Oberflächen das Aufbringen eines Überzuges aus einem aliphatischen Polyester, beispielsweise einer Polyhydroxycarbonsäure vor.

Diese wird in Chloroform und/oder Trichlorbenzol gelöst und mit einer der üblichen physikalischen oder chemischen Beschichtungsmethoden auf die Formteile, beispielsweise aus Stärke, aufgetragen. Hat sich das Lösungsmittel verflüchtigt, so bleibt ein Beschichtungsfilm auf der Oberfläche zurück. Bei genügender Schichtdicke des Überzuges kann das Wasser die so behandelte Stärke nicht mehr anlösen oder anquellen. Solche Schichtkombinationen haften schlecht aneinander. Die Verbesserung der Haftung wird durch verschiedene Maßnahmen erreicht, wie durch eine vorgängige Koronabehandlung der Stärkeoberfläche und/oder durch Zugabe eines Lösungs- oder Quellungsmittels für die Stärke, wie etwa Dimethylsulfoxid, zur Beschichtungslösung.

Stärke ist ein aus alpha-Glucoseeinheiten aufgebautes und daher sehr hydrophiles Polymer. Lineare, amyloseartige und insbesondere kürzere Molekülketten sind wasserlöslich; andere, auch verzweigte Strukturen (Amylopektin) kolloid wasserdispergierbar. Native Stärke liegt mit einer körnigen, teilkristallinen, nicht faserigen Überstruktur vor, welche bei Anwesenheit von Wasser, gegebenenfalls Weichmachern und mechanischer bzw. thermischer Einwirkung etwa im Extruder oder in der Backform tiefgreifenden Quell-, Lockerungs-, Abbau- und Lösbarkeitseffekten unterworfen ist (z.B. Verkleisterung, Plastifizierung). Dies besonders im Gegensatz zur aus beta-Glucoseeinheiten aufgebauten, wasserunlöslichen, faserförmigen und strukturell insgesamt wesentlich stabileren Cellulose.

Verarbeitete, thermisch, eventuell mechanisch (Druck, Scherkräfte) behandelte Stärke ergibt Produkte von amorpher, oft lockerer, poröser und bei Abwesenheit weichmachender Komponenten spröder, brüchiger, nicht mehr nachformbarer und wenig belastbarer Beschaffenheit.

Durch Feuchtigkeitszutritt werden die mechanischen Eigenschaften schnell geändert, das Produkt wird weicher, dehnt sich aus und verliert. bereits ohne direkten Wasserkontakt in feuchter Luft bei Wasseraktivitäten deutlich unter 1 seine Festigkeit und Form.

Bei der Herstellung poröser, schaumstoffartiger Formkörper werden Materialien in ihrem ersten Herstellungsschritt, analog zur bekannten Herstellung von eßbaren Waffeln, zwischen zwei Formhälften ausgebacken. Aus Stärke, Wasser und Hilfsstoffen wird eine Masse bereitet und in die Backformen dosiert. Physikalisch-chemische Vorgänge wie Quellung, Hydratisierung und Verkleisterung der Stärke, Entstehen einer geschäumten porösen Raumstruktur durch Entwicklung von Wasserdampf unter erhöhtem Druck und die Verfestigung dieser Struktur unter Energiezufuhr und Wasseraustritt laufen ab. Nach der Entformung tritt eine graduelle Abkühlung ein, an die eine Feuchteeinstellung bei relativen Feuchten über 50 % anschließt, die zu einem Produktwassergehalt von über 6 %, jedoch nicht über 22 % führen soll. Der Gehalt an Stärke-Trockensubstanz beträgt zwischen 40 und 88 %.

Bei der Herstellung nicht-poröser Formkörper werden Materialien in ihrem ersten Herstellungsschritt aus Stärke, stärkereichen Mehlen verschiedener Art und/oder Stärkederivaten sowie Hilfsstoffen vorzugsweise in einem Extruder compoundiert. Der Gehalt an Stärke bzw. Stärkederivaten soll jeweils über 40 % der Trockensubstanz betragen.

Die Konzentration und Identität der Hilfsstoffe kann verschieden sein. Funktionell sind sie jedoch folgenden Stoffgruppen zuzuordnen. Ihre Zugabe ist mit Ausnahme der erstgenannten fakultativ:
Weichmacher: z.B. Wasser aus dem natürlichen Wassergehalt der Stärke oder durch Zusatz, z.B. Glycerin oder andere Polyole, in Summe nicht weniger als 5 oder mehr als 40 %.
Gleitmittel: z.B. Fette, Fettsäuren, Fettsäurederivate, Emulgatoren.
Bindemittel: z.B. verschiedene synthetische Polymere wie etwa Polyolefine, Polyvinylalkohole, Polyacrylate
Füll- und Zuschlagstoffe zur Einstellung von Härte, Farbe oder zur Kostensenkung.

Während der Extrusion wird die Stärke plastifiziert, d.h. die körnige, teilkristalline Struktur zerstört und ein plastisch fließendes Gemenge erhalten. Dies erfolgt einerseits aufgrund der Scherkräfte in den Knet- und Transportzonen des Extruders, andererseits durch die gleichzeitig erfolgende Erhitzung durch eingeleitete mechanische und thermische Energie. Das Material könnte anschließend aus dieser plastischen Schmelze, geeignete Einrichtungen vorausgesetzt, direkt zu Formkörpern (Spritzguß, Blasformen, Folienextrusion) verarbeitet werden. Zumeist wird es jedoch in Strängen aus dem Extruder ausgeführt und nach gradueller Abkühlung in ein feinkömiges Granulat zerteilt. Dieses Granulat wird auf Kunststoffverarbeitungsmaschinen zu den endgültigen Produkten geformt. Im Falle der stärkereichen Substrate kann nach diesem Ausformungsschritt eine wesentliche Beeinflussung der mechanischen Festigkeit durch eine Feuchteäquilibrierung eintreten:
unter 50 %, insbesondere unter 40 % relative Feuchte: hart, spröde, speziell wenn durch die Abgabe von Wasser der Weichmachergehalt unter 12 % absinkt,
über 50 %, insbesondere über 65 % relative Feuchte: weich, elastisch, speziell wenn durch die Aufnahme von Wasser der Weichmachergehalt über 22 % ansteigt.

Ziel der vorliegenden Erfindung ist es, die vorgehend genannten Stärkeoberflächen zumindest teilweise, etwa an ihrer Oberseite oder Innenseite derart zu beschichten, daß sie für die üblichen Gebrauchszeiten und Anwendungen bei Kühltemperatur, Raumtemperatur, teilweise auch bei heißen Temperaturen über 37 °C dauerhaft wasserdicht sind.

Gegenstand der Erfindung ist ein Verfahren zum mindestens einseitigen bzw. innenseitigen wasserdichten Beschichten von Formkörpern, die durch Backen zwischen zwei Formhälften oder durch Extrudieren von stärkehaltigen Massen erhalten werden, dadurch gekennzeichnet, daß gleichzeitig mit dem Aufbringen eines Lackes, der neben einem oder mehreren human- und/oder ökotoxikologisch unbedenklichen, mit Wasser mischbaren, unter 100°C siedenden Lösungsmitteln aus der Gruppe der Alkohole, Ketone und Ester ein oder mehrere verrottbare hydrophobe filmbildende Stoffe, nämlich hydrophobe Alkylcellulosen, hydrophobe, nicht wasserlösliche Celluloseester aus der Gruppe Celluloseacetatbutyrate, Celluloseacetatpropionate und Celluloseacetate, ein oder mehrere verrottbare hydrophobe Weichmacher, nämlich hydrophobe Triglyceride mittel- und langkettiger Fettsäuren mit einer Kettenlänge größer als oder gleich C4, Triglyceride mit kürzerkettiger Teilsubstitution, wenn zumindest eine Fettsäure mit einer Kettenlänge größer als oder gleich C14 enthalten ist, Phthalsäureester, acyclische Dicarbonsäureester, vollveresterte Citronensäureester, Saccharoseacetatisobutyrat und andere hydrophobe Zuckerester und gegebenenfalls ein oder mehrere verrottbare hydrophobe Bindemittel aus der Gruppe Kolophonium, Kopal, Mastix, Sandarak, hydrierte di- und polymerisierte Harze auf Kolophoniumbasis und aliphatische Kohlenwasserstoffharze enthält, wobei die Komponenten wasserunlöslich und für sich nicht dispergierbar bzw. emulgierbar in Wasser sind und Kein Schellack enthalten, aus der Oberflächenschicht des zu beschichtenden Formkörpers das adsorbierte Hydratwasser zumindest teilweise entfernt wird, worauf das Lösungsmittel(gemisch) unter Aufrechterhaltung eines Mindestfeuchtigkeitsgehaltes des Substrates von 5 Gew.-% bis Geruchsfreiheit entfernt wird.

Besondere Ausführungsarten der Erfindung sind in den abhängigen Patentansprüchen angegeben.

Ein typisches Anwendungsbeispiel für solche beschichteten Formkörper sind Behältnisse zur Aufnahme von Nahrungs- und Genußmitteln. Eine weitere typische Anwendungsform ist die Vergütung wasserempfindlicher Stärkeoberflächen gegen eine gelegentliche Flüssigkeitseinwirkung, z.B. Spritzwasser oder Regen, die ansonsten zu einer irreversiblen Zerstörung dieser Oberfläche durch Quellen, Verformen, Reißen etc. führen würde oder auch die Verbesserung der Beständigkeit gegen eine temporäre Einwirkung höherer Luftfeuchtigkeit, welche bei geschäumten Materialien im Bereich zwischen etwa 85 und 100 % relative Luftfeuchte zum Erweichen und Kollabieren der Struktur führen würde. Bei auf Extrudermaschinen verarbeiteten Produkten ist in diesem Fall eine Reduktion des Zug-E-Moduls die Folge.

Die voranstehend beschriebenen unbeschichteten Formkörper auf Stärkebasis sind zur Aufnahme von wasserhaltigen Nahrungsmitteln, fettenden Nahrungsmitteln sowie luftempfindlichen Nahrungsmitteln nicht geeignet.

Bei Verpackungsmaterialien aus Papier löst man dieses Problem durch Beschichtung mit einem Kunststoffmaterial. Dies schafft aber wieder Probleme mit der Abfallbeseitigung.

Für Nahrungsmittel gibt es Verpackungen aus eßbarem Material, wie Waffelbecher für Eis. Solche Waffelbecher sind jedoch nur für die sehr kurzfristige Aufbewahrung von Eis, d. h. gefrorenen Nahrungsmitteln geeignet. Derartige Waffelbecher werden, wie in der DE-OS 3,543,090 beschrieben, in der Regel an der Innenseite mit Kokosfett oder anderen fettreichen, eßbaren Substanzen befettet. Auch die AT-PS 363,304 erwähnt eine "Fettschicht" für Waffeln. Die US-PS 3,526,515 beschreibt ebenfalls Fettbezüge zur Wasserabweisung bei Eiscremetüten.

Weiters werden in der EP-A2 0,045,522 unter anderem Fettüberzüge vorgeschlagen. Die GB-PS 947,672 beschreibt Ölüberzüge mit Trockenstoffeinlage. In der US-PS 4,390,553 werden Fett-Emulgator-Gemische und deren Aufbringung beschrieben. Weiters beschreibt die EP 0,271,853 das Aufbringen zweier Fettglasurschichten auf Waffelbecher.

Derartige Fettimprägnierungen stellen jedoch nur einen begrenzten Schutz dar. Versuche, auf diese feinporigen Substrate mehr Öl oder Fettschmelze aufzutragen, führen zu einem unerwünschten Durchschlagen durch die Waffel. Nach Erstarren des Fettes zeigen diese Fettüberzüge infolge ihrer Spröde bei mechanischer Belastung, dem Auftreten von Kristallumwandlungen (Fettreifbildung) oder einfach aufgrund der thermischen Schrumpfung und Ablösung beim erforderlichen Abkühlen häufig eine Rißbildung. Dies bringt für eine temporäre Aufbewahrung von z.B. Eis (Tiefkühleistüten) trotzdem Vorteile durch eine deutliche Verminderung des Feuchtigkeitsdurchtrittes - über die gesamte Tüte gerechnet - das Weichwerden der Waffel wird hinausgezögert. Ein Durchtritt von wäßrig-flüssigen Füllgütern erfolgt jedoch aufgrund der erwähnten Riß- und Fehlstellen von Tüte und Fettschicht innerhalb weniger Minuten.

Die vorliegende Erfindung bezieht sich nun auf die Schaffung einer sicheren wasserdichten Beschichtung weitgehend geschlossener, allenfalls mikroporöser Oberflächen, die überwiegend durch thermisch denaturierte Stärke gebildet werden.
Eine Anwendbarkeit bei anderen Produkten mit geringerem Stärkegehalt, bei proteinreichen Oberflächen oder bei anderen polaren, hydratisierten Oberflächen ist damit nicht ausgeschlossen.

Zur Erläuterung sollen im folgenden die verwendeten Begriffe definiert, das Substrat beschrieben und die aus dem Stand der Technik ableitbaren Lösungsansätze sowie die damit erzielten Ergebnisse dargelegt werden.

Im allgemeinen Sprachgebrauch, mitunter auch in der Fach- und Patentliteratur werden manche Begriffe, die unterschiedliche Bedeutung haben, oft synonym verwendet. So etwa die Begriffe "wasserunlöslich" und "wasserdicht". Es ist jedoch zu beachten, daß die Kombination eines wasserunlöslichen Stoffes mit einem zweiten Material, etwa in Form eines Überzuges keineswegs automatisch das gesamte Aggregat wasserbeständig macht. Wasserunlösliche (wasserbeständige, wasserfeste) Stoffe stellen a priori weder per se noch in einer bestimmten Aufbringung (z.B. als Überzug) eine Durchtritts- oder Diffusionssperre für Wasser dar.

Zur Beschreibung der Anforderungen an die erfindungsgemäßen Beschichtungen von stärkebasierten Materialien einige Beispiele:

Im Verkauf von z.B. Obst, Gemüse oder Pilzen werden vielfach Schaumkunststofftassen oder kunststoffüberzogene Kartontassen eingesetzt. Diese Füllgüter geben kaum merkbar, aber kontinuierlich Feuchtigkeit an die Umgebung ab. Auch kann es bei entsprechender Überverpackung zu Kondenswasserbildung kommen.

Um für diesen Zweck stärkebasierte Tassen einsetzen zu können, ist eine zumindest einseitig aufgebrachte geschlossene Beschichtung erforderlich, die für 24 Stunden oder mehr den Wasserdurchtritt verhindert oder soweit herabsetzt, daß kein Form- und Funktionsverlust der Tasse auftritt.

Ein weiteres Beispiel sind Behälter für den Schnellimbiß. Heiß und dampfend eingefüllte Lebensmittel (z.B. Pommes Frites, Fleischlaibchen etc.) geben vermehrt Wasserdampf und Wasser ab.

Eine zumindest einseitig aufgebrachte, geschlossene Beschichtung muß dieser Feuchte und Temperaturbelastung standhalten und auch nach Abkühlen des Inhaltes für zumindest 2 Stunden noch gebrauchsfähig sein.

Als Maximalanforderung sind gegen heiße Flüssigkeiten, etwa Kaffee, beständige Schichten zu nennen.

Als weiteres Beispiel seien etwa Fleischtassen für die Frischfleischdistribution bei Kühltemperatur, teilweise auch Umgebungstemperatur genannt.

Zur Herstellung wasserfester Überzüge für geformte Substrate sind eine Vielzahl von Formulierungen, überwiegend auf Basis von Kunststoffen bekannt, die im Sprüh- oder Tauchverfahren als lösungsmittelhältiger Lack, als wäßrige Dispersion oder als Schmelze appliziert werden.

Die Aufbringung solcher Schichten erfolgt, um zumindest eine, meist aber mehrere Funktionen zu erfüllen; so etwa
Wasserabweisung
Wasserdiffusionssperre gegen Austrocknen oder Feuchtwerden
Diffusionssperre für Sauerstoff, andere Gase
Diffusionssperre für Öle, Fette, Aromastoffe etc.
verbesserte mechanische, optische und hygienische Produkteigenschaften (Schutz)
Träger für Konservierungsstoffe, Farbstoffe, Aromen und andere Lebensmittelzusatzstoffe

Typische Anwendungen für derartige Überzüge bestehen im Bereich der Distribution von Lebensmitteln, beispielsweise das Überziehen von Früchten und Gemüse mit dünnen Wachsschichten, um den Wasserverlust herabzusetzen und den Schutz vor Mikroorganismen zu verbessern ohne die Zellatmung zu unterbinden.

Weiters sind eine Reihe von im Prinzip eßbaren Überzügen bekannt, vgl. die Übersichtsarbeit von J.J. Kester und O.R. Fennema, Food Technology 40 (12), 1986, die auf der Verwendung von Polysacchariden, Proteinen oder Lipiden als Filmbildner beruhen, aber für die hier angestrebte Zielsetzung unzureichende Feuchtigkeitsbarrieren zeigen. Dies gilt auch für sogenannte "Doppelschicht"-Filme, die in eine filmbildende Matrix wasserlöslicher Celluloseether wie etwa Hydroxyethyl-, Hydroxypropyl- oder Methylcellulose polare, meist langkettige Lipide, wie Fettsäuren, Fettalkohole eingelagert haben, die eine Doppelschicht als Barriere ausbilden.

Es war naheliegend, die Aufbringung von Fett- bzw. Fettglasurschichten, wie aus der oben beschriebenen Technik für Eiswaffeln bekannt ist, zu prüfen. Ebenso aus der Papierherstellung bekannte Beschichtungsmassen und Techniken (vgl. Ullmann, IV, Band 17, 623 ff).

Auch aus der Patentliteratur sind eine Reihe von Arbeiten bekannt.

Die US-PS 4,661.359 beschreibt die Herstellung solcher Doppelschicht-Filme, hier unter thermischer, säurekatalysierter Vernetzung wasserlöslicher Celluloseether mit Schellack und Beifügung verschiedener Fettsäuren.

Die EP-A3 0,090,559 beschreibt Überzüge mit Schellack, Zein und Cellulosederivaten.

Die DE-OS 2,556,254 verwendet ebenfalls Filme aus Zein und Alginaten.

In der EP-A3 0,045,522 sind neben den bereits oben erwähnten Fetten auch Lösungen mit Zuckersirup sowie Hydrokolloiden beschrieben.

Die US-PS 4,293,572 kombiniert Fette, Emulgatoren und Zuckersirup zu Dispersionen bzw. Emulsionen für Lebensmittelüberzüge.

In der US-PS 3,471,304 werden Kombinationen von Celluloseethem mit Emulgatoren verschiedener Polarität verwendet.

Die US-PS 1,960,266 beschreibt Überzüge für Papier aus Paraffin, Wachs, Kunstharz und Weichmacher.

Die DE-AS 1,043,049 schließlich offenbart "wasserfeste" Überzüge für Obst durch Aufbringen eines Harz-Schellack-Glyceringemisches.

Ganz allgemein ist anzumerken, daß ein Überzug aus "wasserunlöslichem" Material nicht bedeutet, daß der Überzug wasserdicht ist. Die Geschlossenheit der Schicht, die Permeationskoeffizienten, die Quellbarkeit sind hier zusätzlich in Betracht zu ziehen.

Die Anwendung von Ethylcellulose als Filmbildner ist lange bekannt, ihre Eigenschaften und Anwendungen sind etwa in der technischen Information CSL-2284, Hercules Inc., 1983 zusammengefaßt. Klare Lösungen werden mit Lösungsmitteln erhalten die überwiegend oder ganz aus Aromaten oder chlorierten Kohlenwasserstoffen bestehen.

Die Verwendung polarer, mit Wasser mischbarer Lösungsmittel wie Alkohol, Aceton führen zu brüchigen Filmen. Um feste, flexible Filme zu erhalten, wird bei Verwendung solcher Lösungsmittel wasserfreies Arbeiten gefordert. Die Modifizierung der Filmeigenschaften durch Harze, auch in Bezug auf die Wasserbeständigkeit sowie die Anwendung verschiedener Weichmacher ist dort ebenfalls beschrieben. Richtrezepturen mit Toluol/Ethanol 8/2 als Lösungsmittel werden angegeben. Die Verwendung der empfohlenen Lösungsmittel wie Aromaten und chlorierte Kohlenwasserstoffe ist aufgrund der Sorptionseigenschaften der Stärke (Rückstandsproblematik) ebensowenig möglich, wie eine forcierte thermische Desorption. Diese zerstört über die gleichzeitige Desorption des Wassers die Integrität des Materials. Abgesehen von einer rein technischen Anwendbarkeit solcher Lösungsmittel sind diese aus ökologischen und arbeitshygienischen Gründen heute unerwünscht.

Alle aus der Patent- und Fachliteratur bekannten Arbeiten, die die Herstellung von Schichten mit den Eigenschaften wasserabweisend, abwaschbar oder wasserbeständig beschreiben, versuchen dies auf zwei prinzipiellen Wegen zu erreichen:
1. Schichten, die auf Ölen und Fetten beruhen, unter Mitverwendung anderer, oft hydrophiler Komponenten in einer oder mehreren Lagen aufgebracht werden, und aufgrund der typischen Eigenschaften dieser Fettstoffe
   wenig kohäsiv, oft brüchig, speziell bei gehärteten Fetten
   leicht schmelzbar, speziell bei nicht oder teilgehärteten Fetten
   instabil gegen Kristallumwandlungen bei Lagerung, selbst ohne extremen Temperaturwechsel sind.
2. Schichten, die aus wasserlöslichen oder wasserunlöslichen organischen Filmbildnern unter Mitverwendung von Modifikatoren bestehen. Solche Modifikatoren sind etwa verschiedene Naturstoffe wie Proteine, Harze, Emulgatoren sowie verschiedene synthetische und natürliche Weichmacher. Deren Aufbringung erfolgt aus Lösungen, die bei polaren Bestandteilen Wasser oder mit Wasser mischbare Lösungsmittel wie Alkohole oder niedere Ketone enthalten. Bei nicht wasserlöslichen Filmbildnern werden unpolare Lösungsmittel wie aliphatische, aromatische oder chlorierte Kohlenwasserstoffe eingesetzt, die Schichten wasserfrei aufgebracht.

Besonders schwer zu erreichen ist eine dauerhaft heißwasserfeste Beschichtung weicher, poröser, in Abhängigkeit von ihrem Wassergehalt nicht maßhaltiger Formkörper. Solche überwiegend aus hydrophilen, polaren Stoffen wie Stärke, anderen Polysacchariden, Proteinen hergestellte Produkte sind naturgemäß gegen einen Kontakt mit Wasser oder wasserhaltigen Stoffen nicht beständig und quellen, deformieren sich oder lösen sich auf. Die Sorptionsisotherme solcher Materialien zeigt die bekannte Zu- und Abnahme des Wassergehalts in Abhängigkeit von der Zu- und Abnahme der relativen Luftfeuchtigkeit. Verbunden mit derartigen Wassergehaltsänderungen je nach Umgebungsbedingungen ist eine Dimensionsänderung, die mehrere Prozent betragen kann und die von einer aufgebrachten Schicht ohne Ablösung, Rißbildung oder sonstiges Versagen toleriert werden muß.

In allen Versuchen, bei den oben definierten stärkehaltigen Substraten eine sichere, wasserbeständige und dichte Versiegelung zu erzielen, ist die Übertragung der für Waffeln oder für cellulosebasierte Substrate bekannten Verfahren zur Aufbringung nicht polymerer, wirksamer Wasserschutzschichten bisher nicht gelungen (siehe die nicht erfindungsgemäß ausgeführten Beispiele).

Während bei den typischen cellulosehaltigen Substraten aufgrund der (a) faserförmigen Struktur, (b) ihrer Kompaktheit und (c) ihrer leichten Verfestigbarkeit durch zugesetzte Leim- und Bindestoffe sehr leicht und ohne Zusatz bzw. Anwesenheit spezifischer Weichmacher glatte sowie mechanisch, thermisch und gegen andere Umwelteinflüsse (z. B. Luftfeuchte, Solvenseinwirkung) hinreichend stabile Einheiten (z. B. Blätter, Schichten, Formkörper etc.) erzielbar sind, die dann auch problemlos mit bekannten Agentien beschichtet werden können, stellen stärkereiche Oberflächen wesentlich höhere Anforderungen, die eine vollflächige, fehlerfreie, elastische Abdeckung zum Schutz vor Wasserzutritt verlangen.
Eine auch nur punktuelle Auflösung bzw. Anquellung führt zu Deformationen, Dimensionsvergrößerungen mit folgendem Abplatzen der Schutzschicht, bei geschäumten, porösen Produkten auch zu einem Erweichen und Zusammenfallen der Struktur.
Bei z. B. einseitiger Schutzschicht stehen die nicht bedeckten Teile des stärkereichen Substrates im Gleichgewicht mit der Umgebungsfeuchte, was zu Dimensionsverkürzungen (trockene Luft) bzw. Dimensionsvergrößerungen (feuchte Luft) führt, die unter Umständen mehrere Prozent betragen können. Die Schutzschicht muß derartige Anforderungen unbeschadet ohne Riß- oder Faltenbildung oder Abplatzen mitmachen.
Die bei Gebrauch auftretenden Deformationskräfte (Stauchen, Zug, Knickung - speziell bei dünnwandigen Produkten) dürfen zu keiner Öffnung der Schicht führen. Dies tritt vor allem bei den Öl/Fettbeschichtungen aller Art regelmäßig auf, diese sind wenig kohäsiv. Dies gilt auch für die meisten Wachse, die vielfach auch Fehler durch Risse, Brüche oder Ablösen zeigen. Bei Fetten wiederum stellen Kristallumwandlungen ein weiteres Problem dar.
Alle Beschichtungsstoffe, die aus wäßrigen Dispersionen oder Lösungen bestehen, sind aufgrund der besonders hohen Wasserempfindlichkeit von Stärkeoberflächen nicht anwendbar.

Insgesamt zeigt sich die grundlegende Schwierigkeit, auf einer hydrophilen Oberfläche die selbst Wassermoleküle fest adsorbiert hat, eine stark hydrophobe Deckschicht aufzubringen und zu verankern, zumal amphiphile Emulgatoren die eine solche Haftung vermitteln könnten, gleichzeitig eine erhöhte Wasserdiffusion bedingen. Im Abschnitt über nicht erfindungsgemäß ausgeführte Beschichtungen und deren Testung sind entsprechende Beispiele angeführt.

Nach vielen Versuchen zeigte sich, daß einzig und allein das Einsiegeln bzw. Bedecken mit bereits vorfabrizierten Folien, z.B. aus verschiedenen Kunststoffen einen dauerhaft sicheren Schutz der Stärkeoberfläche darstellt. Unter Bedachtnahme auf die eingangs angeführten ökologischen Argumente und die genannten Anforderungen ist jedoch eine solche Methode abzulehnen und eine Abdeckung möglichst weitgehend auf der Basis von Naturstoffen bzw. Naturstoffderivaten erstrebenswert.

Für eine gebrauchssichere Kombination stark unterschiedlicher Materialien, wie dies etwa eine hydrophobe Deckschicht auf einem hydrophilen Untergrund darstellt wird der Fachmann versuchen eine Art Verbindungs-/Klebeschicht einzubauen, wie dies beispielsweise bei Folienverbunden für Tiefzieh- oder Schlauchbeutelpackungen geschieht:

Polypropylen oder Polyethylen als unpolare strukturgebende Schicht und Polyamid/Ethylvinylalkohol als polare Barriereschicht, dazwischen eine die Adhäsion vermittelnde Schicht.

Man vergleiche auch die Anwendung von Haftgrundmitteln in der Lackierung von Oberflächen.

Eine zweite Variante ist die Anwendung von Emulgatoren mittleren oder höheren HLB-Wertes die über die Orientierung und Wechselwirkung unpolarer Teil zu unpolarer Oberfläche, polarer Teil zu polarer Oberfläche eine Wechselwirkung vermitteln. Emulgatoren vermitteln aber ebenso die Feuchtigkeitspermeation und sind deshalb für die erfindungsgemäße Beschichtung nicht geeignet.

Es hat sich nun überraschenderweise gezeigt, daß unter der Voraussetzung, daß das an der Stärkeoberfläche adsorbierte Hydratwasser zumindest teilweise entfernt wird, eine feste Verankerung und Wechselwirkung zwischen selbst stark hydrophoben Deckschichten und den beschriebenen Stärkeoberflächen erzielt werden kann, ohne daß hydrophile Emulgatoren oder andere eine Klebung vermittelnde Stoffe eingesetzt werden müssen. Diese Deckschichten sind dann auch nicht ohne Zerstörung der Oberfläche entfernbar, es entsteht kein abziehbarer Film.

Das erfindungsgemäße Verfahren zum mindestens einseitigen bzw. innenseitigen wasserabweisenden bzw. wasserdichten Beschichten von Formkörpern, die durch Backen zwischen zwei Formhälften oder durch Extrudieren von stärkehaltigen Massen erhalten werden, besteht nun darin, daß gleichzeitig mit dem Aufbringen eines Lackes, der neben einem oder mehreren human- und/oder ökotoxikologisch unbedenklichen, mit Wasser mischbaren, niedrig siedenden Lösungsmitteln einen oder mehrere verrottbare hydrophobe filmbildende Stoffe und einen oder mehrere verrottbare hydrophobe Weichmacher enthält, aus der Oberflächenschicht des zu beschichtenden Formkörpers das adsorbierte Hydratwasser zumindest teilweise entfernt wird, worauf das Lösungsmittel(gemisch) unter Aufrechterhaltung eines Mindestfeuchtigkeitsgehaltes des Substrates von 5 Gew.-% bis Geruchsfreiheit entfernt wird.

Als Lösungsmittel kommen niedrigsiedende, d.h. unter 100 °C, bevorzugt unter 80 °C siedende, aus der Gruppe der Alkohole, Ketone oder Ester in Frage, ausgenommen solche wie z.B. Methanol, die ausgeprägt human- oder ökotoxische Eigenschaften haben. Aus diesem Grund sind ja die überwiegende Zahl anderer niedrigsiedender Lösungsmittel, beispielsweise Aromaten, halogenierte Lösungsmittel, Nitrile, nicht einsetzbar.

Die Schichtdicken betragen mischen 0,15 und 1,5 g/dm², vorzugsweise 0,4 bis 1,5 g/dm², das entspricht einer durchschnittlichen Schichtdicke von etwa 15 bis 150 Mikrometern.

Aus elektronenmikroskopischen Aufnahmen von Querschnitten läßt sich erkennen, daß im Substrat der Bereich unmittelbarer Wechselwirkung wenige 10 Mikrometer Dicke umfaßt, in denen auch ein vereinzeltes Füllen von Poren oder deren Überbrückung auftritt und eine besonders innige Verbindung erfolgt. In diesem Bereich ist eine besonders wirksame Wasserdesorption durch das Lösungsmittel anzunehmen. Bei einem Schichtauftrag (nach Abtrocknung) von ca. 20 - 40 Mikrometer Dicke zeigt sich bei den nicht porösen Substraten eine Wechselwirkungszone ebenfalls in dieser Größenordnung, bei den porösen Substraten ist ein zweiter Bereich einer gewissen, ebenfalls durch das Lösungsmittel verursachten Wechselwirkung anzunehmen mit weiteren 100 - 300 Mikrometern Dicke.

Das Vorliegen dieser Effekte kann aus der Tatsache geschlossen werden, daß das Behandeln der in den Beispielen 1 und folgende genannten Produkte mit dem Lösungsmittel(gemisch) allein zu einer signifikanten Versprödung der Struktur führt, ohne daß in den Produkten im organischen Lösungsmittel lösliche Komponenten (außer Wasser) vorhanden wären. Diese Versprödung ist bei Lösungsmitteln, welche mit Wasser ganz oder teilweise mischbare Solventien enthalten (z. B. Aceton, Ethanol, Ethylacetat), deutlich stärker als bei solchen, die lediglich Azeotrope mit Wasser bilden.

Wird nun das organische Lösungsmittel(gemisch) gleichzeitig als Solvens für die erforderlichen hydrophoben Beschichtungskomponenten verwendet, tritt nach dessen anschließender Abtrocknung eine wirksame Oberflächenvergütung ein:
a) Mechanische Verfestigung der Gesamtstruktur der Stärkeoberfläche, auch als Ersatz der etwa einer Cellulosestruktur a priori eigenen Festigkeit, durch Stoffeinlagerung und physikalisch-chemische Wechselwirkung.
b) Sicheres vollflächiges Abdecken aller Stärkeeinheiten selbst bei Vorliegen eines inhärenten mikro- und/oder makroporösen Aufbaus. Dazu muß ein übermäßiges Abfließen des Lackes durch Viskositätsanhebung über den Einsatz von Filmbildnern verhindert werden.

Anforderungen an die aufzubringenden Komponenten und die damit erhaltenen Deckschichten:
1. Diese müssen stark hydrophob und wasserunlöslich sein. Sie dürfen für sich nicht dispergierbar bzw. emulgierbar in Wasser sein. Dieses Grundprinzip macht die unterschiedliche Eignung bestimmter Stoffe, z.B. einzelner Harze, Harzderivate, Wachse verständlich, die je nach Herkunft und Behandlung doch zu stark hydrophile bzw. emulgierend wirkende Anteile enthalten können.
   Falls, wie in der Regel üblich, neben der stark hydrophoben Hauptkomponente noch weitere, zur Modifikation von Schichteigenschaften wie etwa Elastizität, Glanz, Klebrigkeit, Fließverhalten, Filmbildung, Farbe, erforderliche Stoffe mitverwendet werden, haben auch diese hydrophob und wasserunlöslich zu sein.
2. Die erfindungsgemäßen Deckschichten müssen auf der zumeist vorgeformten Substratoberfläche ohne Zuhilfenahme zusätzlicher Bindemittel fest verankert vorliegen und dürfen auch durch äußere Einflüsse, z.B. Längenausdehnung infolge Hydratation des Substrates oder umgekehrt durch Schrumpfung, nicht abgelöst werden. Dabei tritt auch eine überraschende Überbrückung von Fehlstellen im Substrat (Poren, Risse) bei gleichzeitiger Poren- und Rißfreiheit der Schicht auf.
3. Die gebildeten Deckschichten müssen elastisch und kohäsiv sein und dürfen bei den typischen Anwendungsbelastungen (Temperaturschwankungen, mechanischer Druck, Zug) ihre Funktion nicht verlieren, wie dies etwa bei bekannten Schichten welche z.B. aus Speisefetten, Schokolade, Sirupen bestehen, leicht durch Wegfließen oder Brechen infolge mangelnder Kohäsion, innerer Kristallumwandlung, etc. der Fall sein kann.

Als Komponenten für diese Deckschichten werden verwendet:

### Filmbildende Stoffe:

Filmbildner aus der Gruppe der Alkylcellulosen, ausgenommen hydrophile, teilweise oder gänzlich wasserlösliche Produkte wie z. B. Methylcellulose oder Hydroxyalkylcellulosen. Weiters hydrophobe, nicht wasserlösliche Celluloseester aus der Gruppe Celluloseacetobutyrate, Celluloseacetopropionate, Celluloseacetate, nicht aber deren teilhydrophile, teilveresterte Formen.

Speziell die oben angesprochene Viskositätserhöhung, die Porenüberbrückung und die Elastizität der Schichten wird durch diese Filmbildner vermittelt, wobei zusätzlich die Mitverwendung hydrophober Weichmacher zwingend erforderlich ist.

### Weichmacher:

Hydrophobe Weichmacher aus der Gruppe Triglyceride mittel- und langkettiger Fettsäuren (Kettenlänge größer/gleich C4), Triglyceride mit kürzerkettiger Teilsubstitution, wenn zumindest eine Fettsäure mit Kettenlänge größer/gleich C14 enthalten ist, Phthalsäureester, acyclische Dicarbonsäureester, vollveresterte Citronensäureester, Saccharoseacetatisobutyrat (Eastman Kodak) und andere hydrophobe Zuckerester.

### Bindemittel:

Als Bindemittel dienen hydrophobe Naturharze aus der Gruppe Kolophonium, Kopal, Mastix, Sandarak, Schellack, hydrierte, di- und polymerisierte Harze auf Kolophoniumbasis, aliphatische Kohlenwasserstoffharze. Hingegen sind teilhydrophile, oder stärker emulgierend wirkende Stoffe nicht geeignet, so z.B. Harzseifen wie sie in der Leimung von Papier Verwendung finden.

Die Verwendung eines Bindemittels ist für eine verschlechterte Ausführung nicht zwingend erforderlich, wird aber wegen einer zusätzlichen Erhöhung der mechanischen Stabilität der Beschichtung bevorzugt (Beispiel 8). Formulierungen die lediglich Weichmacher und Bindemittel enthalten sind ebenfalls als verschlechterte Ausführung mit reduzierter Permeationssperre anzusehen (Beispiel 9).

In den Ausführungsbeispielen sind eine Reihe von Zusammensetzungen angegeben. Der Anteil Schichtkomponenten zu Lösungsmittel(gemisch) ist insofern variabel, daß die genannten Beschichtungsgewichte sowohl durch Mehrfachauftragung als auch mittels Einfachauftragung erreicht werden können. In der Regel wird der Lösungsmittelanteil zwischen 65 und 95 Liter, bevorzugt 70 bis 92 Liter, der entsprechende Anteil an Schichtkomponenten 35 bis 5 kg, bevorzugt 30 bis 8 kg, betragen und vom Anwender nach seinem Fachwissen auszuwählen sein.

Die angeführten Schichten sind, soweit die genannten filmbildenden Stoffe eingesetzt werden, zumindest bis 60 °C heißwasserbeständig.

### Testmethoden, Beurteilung:

Ein praxisgerechtes Testen von Beschichtungen ist aus den ausgeführten Gründen
1. geformte Substrate mit teilweise poröser Struktur
2. spezifische Wechselwirkung und Durchdringung der Beschichtung mit äußeren Teilbereichen des Substrates
nur an fertigen Substrat-Schichtkombinationen, nicht an Beschichtungsfilmen auf inerten Oberflächen oder an Folien aus dem Schichtmaterial möglich. Letztere sind allenfalls zur Beurteilung der Sprödigkeit einer Schicht oder der Verträglichkeit der Komponenten anwendbar.

Aufgrund der ausgeführten schwierigen Problemstellung ist das Erreichen einer mit Sicherheit wasserfesten Schicht selbst für Zeiträume von wenigen Stunden bereits ein wichtiger Fortschritt. Aus diesem Grund kommt der Kinetik eines allfälligen Wasserdurchtritts durch die Beschichtung ebenfalls Bedeutung zu.

Eine soweit reduzierte Diffusion, daß das beschichtete Testobjekt über die Testzeit von mehreren Stunden weniger Feuchtigkeit durchläßt, als das stärkereiche Substrat ohne Verlust der geforderten Eigenschaften aufnehmen kann, ist bereits als erfindungsgemäß erfolgreiche Beschichtung zu werten (Teststufe 1). Insbesondere sind jedoch Testzeiten über 24 Stunden als Kriterium heranzuziehen (Teststufe 2). Um den Einfluß einzelner Komponenten zu verdeutlichen, ist bei mehreren Beispielen direkt die Testzeit in Tagen angegeben.

Die aufgebrachte Schichtdicke hat bei dieser Sachlage ebenfalls entscheidenden Einfluß, da sie ja proportional die diffundierende Wassermenge herabsetzt. Nicht erfindungsgemäße Beschichtungsbeispiele sind daher solche, die vorzugsweise über eine Behinderung der Diffusion infolge besonders hoher Schichtdicken, etwa über 1,5 g/dm², dafür aber unter Mitverwendung nur zum Teil hydrophober oder emulgierender Stoffe hergestellt wurden.

### Heißwasserbeständigkeit:

Eine verschärfte Testbedingung ist die Beständigkeit der vergüteten Oberflächen gegen Heißwasser.

Teststufe 3: Befüllen eines innenbeschichteten Behälters mit Heißwasser bei 60 °C.

Der Behälter muß für zumindest 60 Minuten die heiß eingefüllte und dann bei Raumtemperatur erkaltende Flüssigkeit halten. Damit soll eine Eignung als Trinkbecher für Heißgetränke simuliert werden.

### Ausführungsbeispiele:

Die im folgenden angeführten Substrate der Beschichtung enthalten zwischen 6 und 22 % Wasser, bevorzugt zwischen 10 und 16 %.

Inwieweit es neben der beschriebenen Dehydratisierung zu einer Abtrocknung durch den Beschichtungsvorgang oder durch den folgenden Trocknungsschritt zur Entfernung des Lösungsmittels kommt, ist nicht auf einfache Weise quantifizierbar. Vereinzelt, besonders bei Warmluftanwendung ohne Luftbefeuchtung sind die Verluste auf bis zu 40 % zu schätzen.

Die Beschichtung erfolgt nach folgendem Ablauf:
(a) Rohmasse - Back-/Trocknungsvorgang - Wassergehaltseinstellung - Beschichtung
(b) Granulat - Vortrocknung - Formgebung, z.B. Spritzguß - Wassergehaltseinstellung - Beschichtung

Eine weitere bevorzugte Ausführungsform ist das Aufbringen einer einseitigen Lackschicht während der Fertigung des Basismaterials nach folgendem Ablauf:
(a) Rohmasse - Back-/Trocknungsvorgang - Beschichtung - Gleichgewichtseinstellung
(b) Granulat - Vortrocknung - Formgebung, z.B. Spritzguß - Beschichtung - Gleichgewichtseinstellung

In diesem Fall liegt der Wassergehalt der nach (a) hergestellten Substrate jedenfalls unter 6 %, vorzugsweise unter 4 %. Die Einstellung des Feuchtegleichgewichtes, verbunden mit einer allfälligen Ausdehnung des Formkörpers führt zu keinem Ablösen der Schicht.

Für Substrate nach Verfahren (b) sind direkt aus dem Fertigungsvorgang allerdings auch höhere Wassergehalte bis zu 22 % möglich.

### A: Becher, konische Form, Höhe 30 mm

Durchmesser am Boden 40 mm, Durchmesser oben 70 mm
breite Längsrippen in Außenwand, Innenseite glatt mit kleiner Stufe am Übergang Wand-Boden. Innenseite 76 cm².
weißer Becher, vorwiegend aus Kartoffelstärke, Materialdichte 0,18 g/cm³.

| | | |
|---|---|---|
| Zusammensetzung: | Kohlenhydrate | 85,5 % |
| | Wasser | 10,5 % |
| | Protein unter | 0,5 % |
| | Fett unter | 0,5 % |
| | sonst. Bestandteile | 3,5 % |

### B: Becher, konische Form, Höhe 30 mm

Durchmesser am Boden 40 mm, Durchmesser oben 70 mm
breite Längsrippen in Außenwand, Innenseite glatt mit kleiner Stufe am Übergang Wand-Boden. Innenseite 76 cm².
weißer Becher, vorwiegend aus Kartoffelstärke, Materialdichte 0,23 g/cm³.

| | | |
|---|---|---|
| Zusammensetzung: | Kohlenhydrate | 85,0 % |
| | Wasser | 10,5 % |
| | Protein unter | 0,5 % |
| | Fett unter | 0,5 % |
| | sonst. Bestandteile | 4,0 % |

### C: Becher, konische Form, Höhe 30 mm

Durchmesser am Boden 40 mm, Durchmesser oben 70 mm
breite Längsrippen in Außenwand, Innenseite glatt mit kleiner Stufe am Übergang Wand-Boden. Innenseite 76 cm².
weißer Becher, vorwiegend aus Kartoffelstärke/Maisstärke, Materialdichte 0,19 g/cm³.

| | | |
|---|---|---|
| Zusammensetzung: | Kohlenhydrate | 86,0 % |
| | Wasser | 9,5 % |
| | Protein unter | 0,5 % |
| | Fett unter | 0,5 % |
| | sonst. Bestandteile | 4,0 % |

### D: Becher, konische Form, Höhe 50 mm

Durchmesser am Boden 50 mm, Durchmesser oben 65 mm

Außenseite glatt mit Stapelring, Innenseite glatt mit gerundetem Übergang Wand-Boden. Innenfläche 100 cm².
beigefarbener Becher, vorwiegend aus Kartoffelstärke, Materialdichte 0,21 g/cm³.

| | | |
|---|---|---|
| Zusammensetzung: | Kohlenhydrate | 84,0 % |
| | Wasser | 10,5 % |
| | Protein | 2,5 % |
| | Fett unter | 0,5 % |
| | sonst. Bestandteile | 3,0 % |

### E: Becher, konische Form, Höhe 50 mm

Durchmesser am Boden 50 mm, Durchmesser oben 65 mm

Außenseite glatt mit Stapelring, Innenseite glatt mit gerundetem Übergang Wand-Boden. Innenfläche 100 cm².
weißer Becher, vorwiegend aus Kartoffelstärke, Materialdichte 0,23 g/cm³.

| | | |
|---|---|---|
| Zusammensetzung: | Kohlenhydrate | 85,0 % |
| | Wasser | 10,5 % |
| | Protein unter | 0,5 % |
| | Fett unter | 0,5 % |
| | sonst. Bestandteile | 4,0 % |

### F: Blätter glatt, 2,1 mm stark, Format 230 × 290 mm

Farbe weiß, vorwiegend aus Kartoffelstärke, Materialdichte 0,16 g/cm³.

| | | |
|---|---|---|
| Zusammensetzung: | Kohlenhydrate | 83,0 % |
| | Wasser | 11,0 % |
| | Protein unter | 0,5 % |
| | Fett | 0,5 % |
| | sonst. Bestandteile | 5,5 % |

### G: Tassen 140 × 210 mm, abgerundete Ecken, mit 19 mm hohem Rand mit rundumlaufenden breiten Rippen.

Farbe weiß, vorwiegend aus Kartoffelstärke, Materialdichte 0,18 g/cm³.

| | | |
|---|---|---|
| Zusammensetzung: | Kohlenhydrate | 85,5 % |
| | Wasser | 11,0 % |
| | Protein unter | 0,5 % |
| | Fett unter | 0,5 % |
| | sonst. Bestandteile | 3,0 % |

### H: Tassen 190 × 140 mm, abgerundete Ecken, mit 20 mm hohem Rand und glatt ausgeführt, an der Innenseite waffelartige Musterung mit Emblem.

Farbe graubraun, vorwiegend aus Kartoffelstärke, Materialdichte 0,25 g/cm³.

| | | |
|---|---|---|
| Zusammensetzung: | Kohlenhydrate | 75,0 % |
| | Wasser | 11,5 % |
| | Protein | 1,0 % |
| | Fett unter | 0,5 % |
| | sonst. Bestandteile | 12,0 % |

### I: Tassen 135 × 180 mm, abgerundete Ecken, mit 15 mm hohem Rand, Musterung mit Schriftzug, Kanten (Schmalseite) offenporig, Porengröße bis 1,5 mm.

Farbe weiß, vorwiegend aus Kartoffelstärke, Materialdichte 0,21 g/cm³.

| | | |
|---|---|---|
| Zusammensetzung: | Kohlenhydrate | 85,0 % |
| | Wasser | 11,0 % |
| | Protein unter | 0,5 % |
| | Fett unter | 0,5 % |
| | sonst. Bestandteile | 3,5 % |

### J: Teller rund, Durchmesser 130 mm, Höhe 23 mm, allseitig glatte Oberfläche.

Farbe weiß, vorwiegend aus Kartoffelstärke, Materialdichte 1,33 g/cm³.

| | | |
|---|---|---|
| Zusammensetzung: | Kohlenhydrate | 86,0 % |
| | davon Glycerin | 16,0 % |
| | Wasser | 8,0 % |
| | Protein unter | 0,1 % |
| | Fett unter | 0,5 % |
| | sonst. Bestandteile | 4,5 % |

### K: Zugprüfstab nach DIN 53455, Prüfkörper 3, allseitig glatte Oberfläche

Farbe weiß, vorwiegend aus Kartoffelstärke/Maisstärke, Materialdichte 1,33 g/cm³.

| | | |
|---|---|---|
| Zusammensetzung: | Kohlenhydrate | 82,0 % |
| | davon Glycerin | 19,5 % |
| | Wasser | 9,5 % |
| | Protein unter | 0,5 % |
| | Fett unter | 0,5 % |
| | sonst. Bestandteile | 8,0 % |

### L: Zugprüfstab nach DIN 53455, Prüfkörper 3, allseitig glatte Oberfläche

Farbe hellgraubraun, vorwiegend aus Kartoffelstärke und Weizenmehl, Materialdichte 1,31 g/cm³.

| | | |
|---|---|---|
| Zusammensetzung: | Kohlenhydrate | 76,5 % |
| | davon Glycerin | 15,0 % |
| | Wasser | 13,0 % |
| | Protein | 3,5 % |
| | Fett unter | 1,0 % |
| | sonst. Bestandteile | 6,0 % |

### M: rechteckige, leicht konische Schale, Höhe 50 mm, Länge oben 140 mm, Breite oben 90 mm, Länge unten 105 mm, Breite unten 55 mm

Farbe weiß, vorwiegend aus Kartoffelstärke, Materialdichte 0,18 g/cm³.

| | | |
|---|---|---|
| Zusammensetzung: | Kohlenhydrate | 85,5 % |
| | Wasser | 11,0 % |
| | Protein unter | 0,5 % |
| | Fett unter | 0,5 % |
| | sonst. Bestandteile | 3,0 % |

### N: Tütenartiger Behälter, Seitenlänge 80 mm, Durchmesser 100 mm, innen glatt, außen Schriftzug.

Waffelfarben, überwiegend aus Weizenmehl und Kartoffelstärke, Materialdichte 0,16 g/cm³.

| | | |
|---|---|---|
| Zusammensetzung: | Kohlenhydrate | 77,0 % |
| | Wasser | 8,0 % |
| | Protein | 8,5 % |
| | sonst. Bestandteile | 6,5 % |

### O: Tütenartiger Behälter, Seitenlänge 50 mm, Öffnungsdurchmesser 56 mm, mit direktanschließendem, zylindrischen Ring, Höhe 8 mm, gleicher Öffnungsdurchmesser

Farbe cremefarben, vorwiegend aus Kartoffelstärke, Materialdichte 1,35 g/cm³.

| | | |
|---|---|---|
| Zusammensetzung: | Kohlenhydrate | 87,0 % |
| | davon Glycerin | 16,0 % |
| | Wasser | 7,0 % |
| | Protein unter | 1,0 % |
| | Fett unter | 0,5 % |
| | sonst. Bestandteile | 4,5 % |

### P: Tassen 165 × 165 × 19 mm, abgerundete Ecken

Farbe weiß, vorwiegend aus Kartoffelstärke und Kartoffelstärkederivat, Materialdichte 0,16.

| | | |
|---|---|---|
| Zusammensetzung: | Kohlenhydrate | 86,5 |
| | davon modifizierte Stärke | 8,5 |
| | davon Cellulose | 2 |
| | Wasser | 11,5 |
| | Protein unter | 0,5 |
| | Fett unter | 0,5 |
| | sonst. Bestandteile | 1,7 |

### Q: Tassen 220 x 220 x 20 mm, abgerundete Ecken

Farbe weiß, vorwiegend aus Kartoffelstärke und Stärkederivat, Materialdichte 0,17.

| | | |
|---|---|---|
| Zusammensetzung: | Kohlenhydrate | 86,0 |
| | davon modifizierte Stärke | 34,5 |
| | Wasser | 11,5 |
| | Protein unter | 0,5 |
| | Fett unter | 0,5 |
| | sonst. Bestandteile | 2,0 |

### R: Konische, längliche Schale 148 × 90 × 50 mm

Cremefarbe, vorwiegend aus Cellulose, Kartoffelstärke und Stärkederivat, Materialdichte 0,16.

| | | |
|---|---|---|
| Zusammensetzung: | Kohlenhydrate | 82,5 |
| | davon modifizierte Stärke | 4,0 |
| | davon Cellulose | 41,5 |
| | Wasser | 9,0 |
| | Protein unter | 0,5 |
| | Fett unter | 0,5 |
| | sonst. Bestandteile | 8,0 |

Nicht erfindungsgemäß ausgeführte Beschichtungen und deren Testung:

### (a) ohne Beschichtung

Durch den Kontakt mit Wasser kommt es sofort zu einem Anquellen und einer Erweichung der Oberfläche, nach Entfemen der abgießbaren Flüssigkeit ist eine gewisse Klebewirkung festzustellen (Substrate D, J).

Nach spätestens 15 Minuten tritt beim Substrat D eine durchgehende Erweichung, meist mit Durchtritt von Flüssigkeit auf.

Substrat J quillt zunehmend; gequollene, flockige Partikel lösen sich von der Oberfläche ab.

### (b) Verwendung handelsüblicher, vorformulierter Beschichtungsstoffe

1. Schellack-Klarlack mit Kopalharz und Lärchenharz-Balsam (Auro),
2. Schellack-Klarlack mit Kopalharz, Dammar, Kieselsäure, Leinöl-Fettsäure, Balsamterpentinöl (Auro),
3. weißer Lack Naturharzöl mit Titanoxid pigmentiert (Auro),
4. Nitrolack Fritzeloid 716 (O. Fritze),
5. Acryllack Überzugslack 725 (O. Fritze),
6. PVC-Lack Vernierlack 726 (O. Fritze),
7. Schellack-Klarlack Spritzlack 737 (O. Fritze)
8. Polyamid-Lack für Wursthüllen in Isopropanol
9. Cegeskin R Tauchlösung für Rohwürste (Grünau)
10. PVDC-Dispersion IXAN WA 50 (Solvay)

In keinem der Fälle konnte eine dauerhaft wasserbeständige Beschichtung erhalten werden (Substrat D):
- Nr. 1., 2., 4., 5., 6., 7., 8.: zu spröde, Rißbildung, Erweichen
- Nr. 3: Ablösung von der Matrix, dicke Schicht
- Nr. 9: Durchweichen
- Nr. 10: Rissige, nicht fest haftende Schicht,
Deformation des Substrates

### Aufbringen von Beschichtungslösungen mit organischen Lösungsmitteln:

In den im folgenden beschriebenen Beispielen wurde die lackähnliche Beschichtung mit bekannten Auftragungsverfahren bis zum Erreichen der erforderlichen Beschichtungsgewichte aufgebracht:

Der Auftragungstechnik selbst - Gießen, Pinseln, Spritzen, Schleudern - kommt keine primäre Bedeutung zu.

Die Abtrocknung erfolgte durch Trocknen bei Raumtemperatur bzw. durch beschleunigte Abtrocknung im Warmluftstrom bis zur Geruchsneutralität, bevorzugt unter 45 °C, jedenfalls um etwa 10 Grad unter dem Siedepunkt des jeweils tiefstsiedenden Lösungsmittelanteils.

Angaben in Gewichtsteilen, ausgenommen Lösungsmittel. Für diese wird die bei Dichte = 1 äquivalente Volumenangabe verwendet (siehe Beispiel 1).

### Beispiel 1:

Beschichtungssubstrat A, Innenbeschichtung: 0,4 g/dm² Auftrag nach Abtrocknung

| | |
|---|---|
| Ethylcellulose | 15 g |
| Kolophonium | 6 g |
| Ethanol | 25 ml |
| Ethylacetat | 25 ml |
| Aceton | 25 ml |
| Weichmacher | 4 g |

| Ergebnisse: | Weichmacher | Testzeit in Tagen |
|---|---|---|
| | Dioctylphthalat | 24 |
| | Tributyrin | 12 |
| | Mittelkettige Triglyceride | 16 |
| | Trioleat | 5 |

### Beispiel 2:

Beschichtungssubstrat A, Innenbeschichtung: 0,3 g/dm² Auftrag nach Abtrocknung

| | |
|---|---|
| Ethylcellulose | 15 |
| Kolophonium | 6 |
| Ethanol | 25 |
| Ethylacetat | 25 |
| Aceton | 25 |
| Weichmacher | 4 |

| Ergebnisse: | Weichmacher | Testzeit in Tagen |
|---|---|---|
| | Butylstearat | < 1 |
| | Ölsäure | 10 |

### Beispiel 3:

Beschichtungssubstrat A, Innenbeschichtung: 0,6 g/dm² Auftrag nach Abtrocknung

| | |
|---|---|
| Ethylcellulose | 15 |
| Kolophonium | 6 |
| Ethanol | 25 |
| Ethylacetat | 25 |
| Aceton | 25 |
| Weichmacher | 4 |

| Ergebnisse: | Weichmacher | Testzeit in Tagen |
|---|---|---|
| | Epoxidiertes Sojaöl | 57 |
| | Polymerginsäure | 12 |

### Beispiel 4.1:

Beschichtungssubstrat B, Innenbeschichtung: 0,4 g/dm² Auftrag nach Abtrocknung

| | |
|---|---|
| Ethylcellulose | 15 |
| Kolophonium | 6 |
| Ethanol | 25 |
| Ethylacetat | 25 |
| Aceton | 25 |
| Rizinusöl | 4 |

Ergebnis: Testzeit in Tagen > 150

### Beispiel 4.2:

Substrat und Beschichtung wie 4.1, Befüllen mit Heißwasser (Teststufe 3)

Ergebnis: Testzeit in Stunden > 24

### Beispiel 5:

Beschichtungssubstrat B, Innenbeschichtung: 0,25 g/dm² Auftrag nach Abtrocknung

| | |
|---|---|
| Ethylcellulose | 15 |
| Kolophonium | 6 |
| Ethanol | 25 |
| Ethylacetat | 25 |
| Aceton | 25 |
| Ölsäure | 4 |

Ergebnisse: Testzeit in Tagen > 50

### Beispiel 6:

Weitere lösungsmittelhaltige Formulierungen:

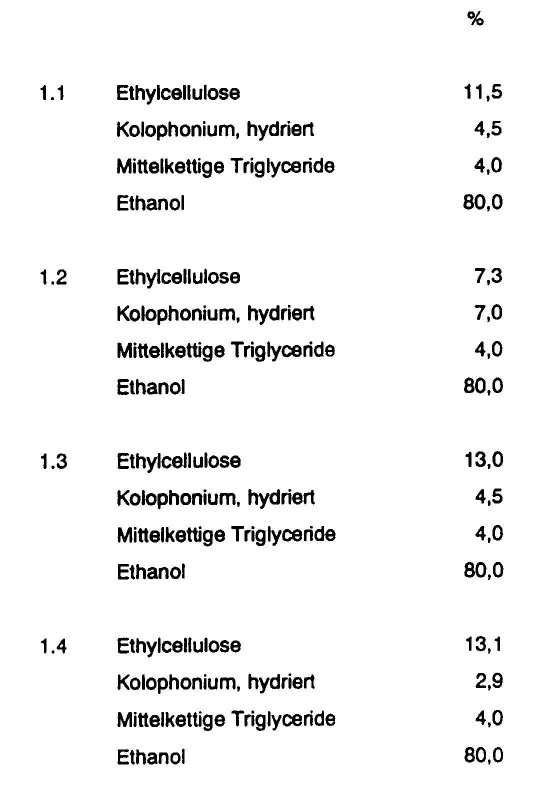

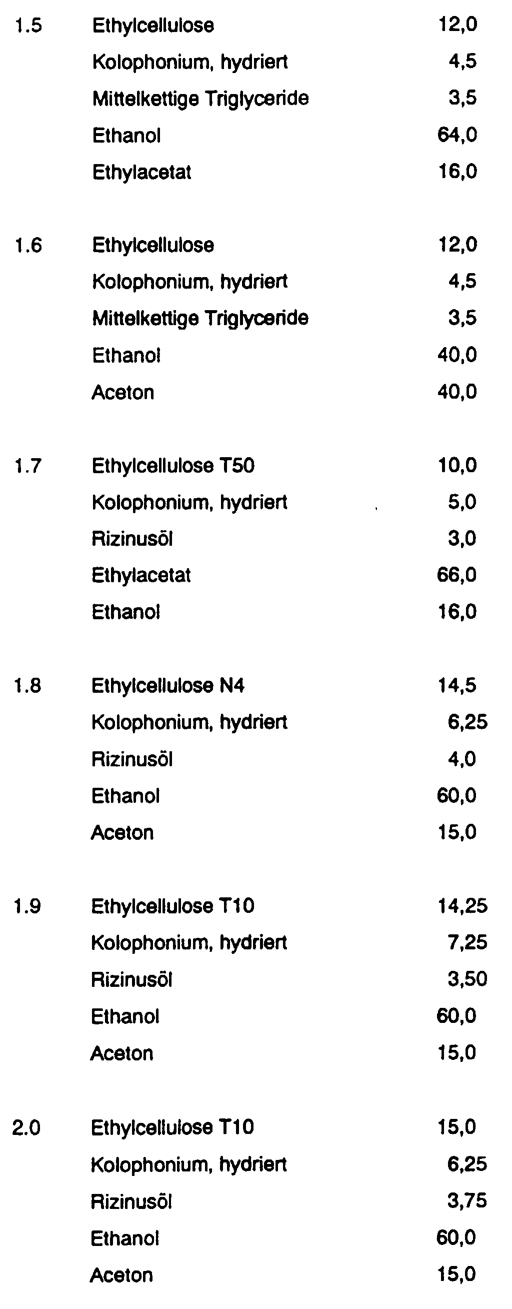

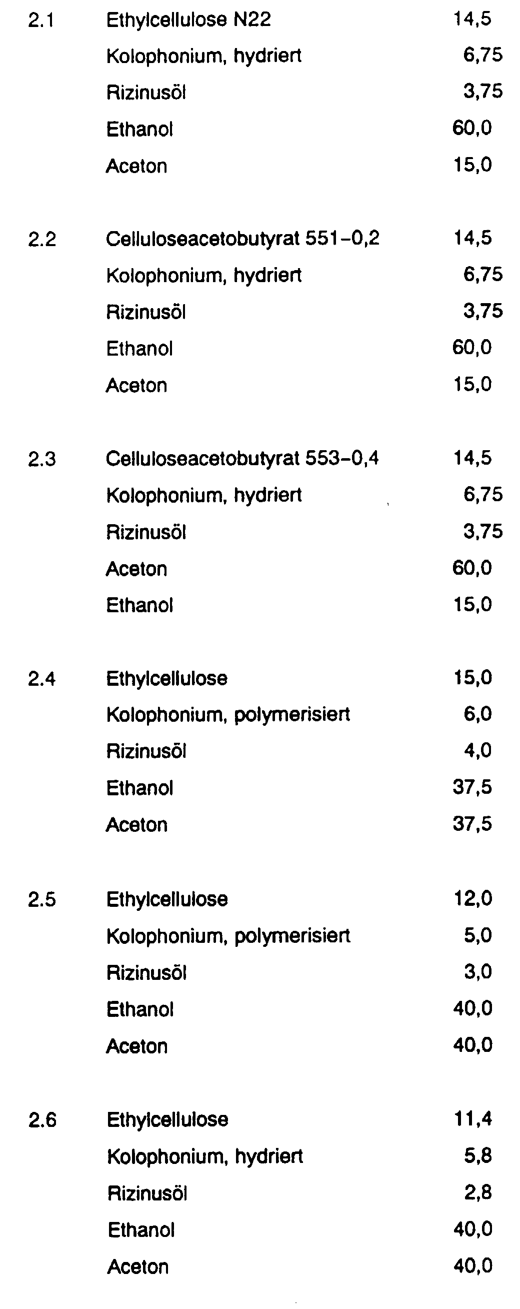

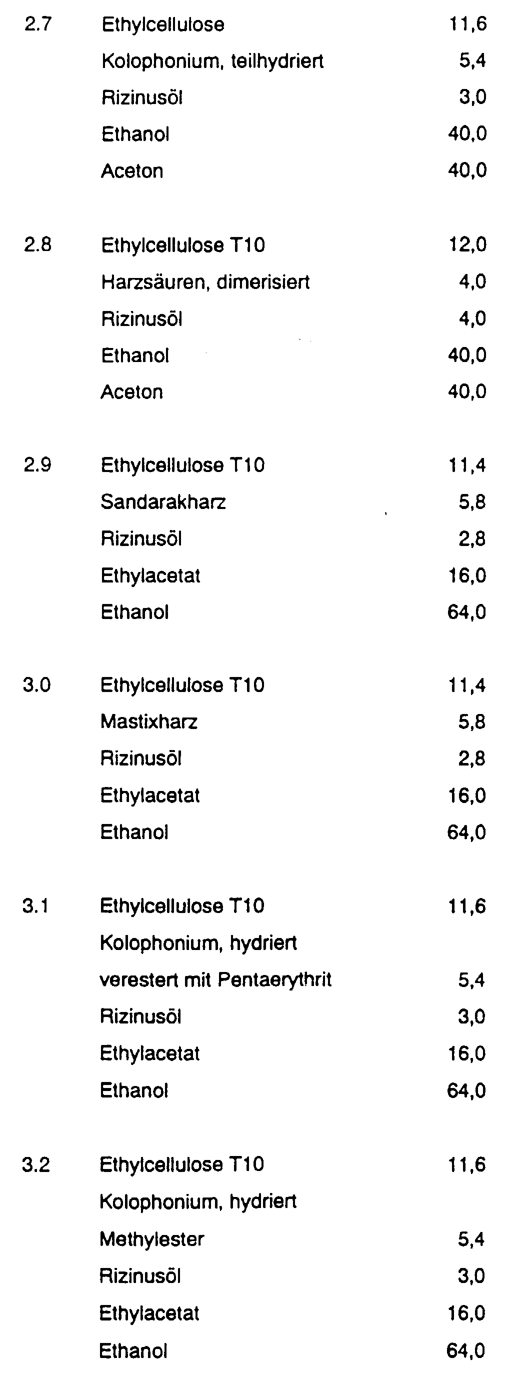

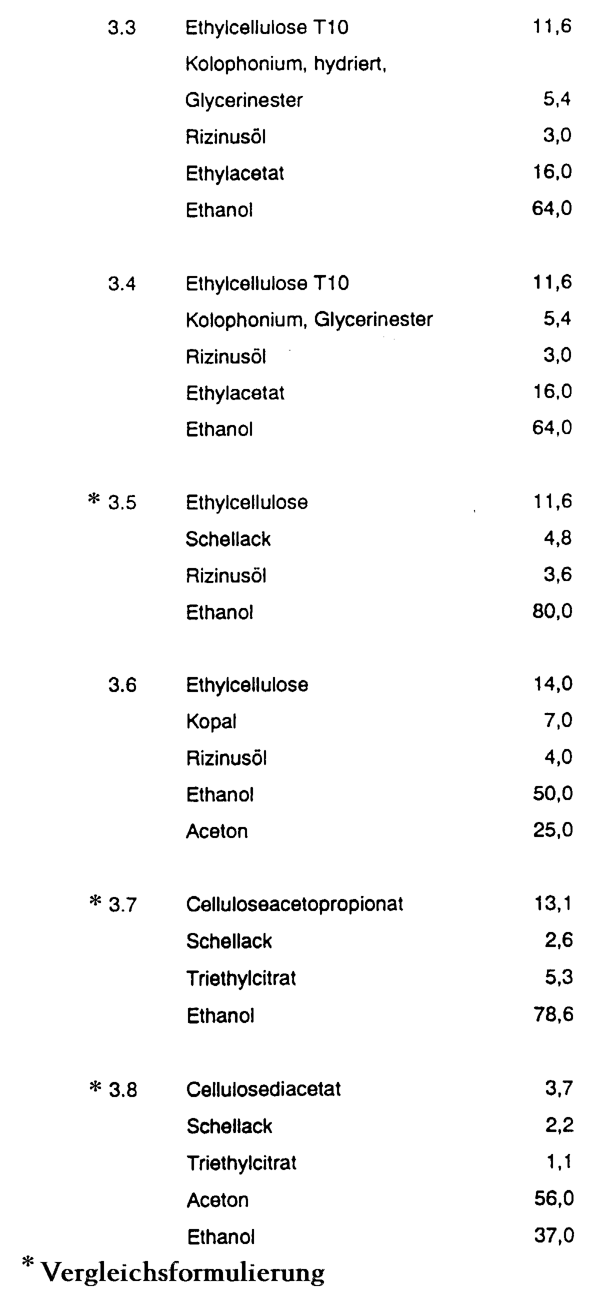

Die angeführten Beschichtungen ergeben bei Tests mit den Substraten A und B bei Beschichtungsauftragung zwischen 0,3 und 0,5 g/dm² (nach Abtrocknen). Ergebnisse entsprechend Teststufe 2., ausgenommen Beschichtung 3.2 und 3.5 (Teststufe 1).

### Beispiel 7:

| | |
|---|---|
| Ethylcellulose N7 | 15,0 |
| Kolophonium, hydriert | 6,0 |
| Ethanol | 50,0 |
| Aceton | 25,0 |
| Rizinusöl | 4,0 |

0,4 g/dm² Auftragung nach Abtrocknung

| Substrat-Bezeichnung | Teststufe |
|---|---|
| B | 2,3 |
| C | 2 |
| D | 2 |
| E | 2 |
| F | 2 |
| G | 2 |
| H | 1 |
| I | 1 |
| J | 2 |
| K | 2 |
| L | 2 |
| M | 2 |
| N | 1 |
| O | 2 |

### Beispiel 8:

Substrate B, O; Innenbeschichtung durch Sprühverfahren

| | |
|---|---|
| Ethylcellulose | 15 |
| Ethanol | 30 |
| Methylacetat | 25 |
| Aceton | 25 |
| Ricinusöl | 5 |

Trocknen im Warmluftstrom (45 - 50 °C)

Der Wassergehalt von Substrat O reduziert sich um max. 0,5 % auf ca. 6,8 %. Der Wassergehalt von Substrat B geht um 0,5 % auf ca. 9,3 % zurück.

### Teststufe 1

Dieses Beispiel, Filmbildner plus Weichmacher ohne Bindemittel, ergibt weichere, weniger glatte, weniger kratzfeste Schichten mit reduzierter Durchtrittszeit.

### Vergleichsbeispiel 9:

Substrate B, O; Innenbeschichtung durch Gießverfahren

| | |
|---|---|
| Kolophonium, hydriert | 32,3 |
| Ethanol | ad 100 |
| Aceton | 25 |
| Propanol-2 | 10 |
| Ricinusöl | 1 |

Diese vergleichsweise niedrigviskose Lösung führt im Substrat B zu einer mangelnden Porenüberbrückung, offenbar durch Abfließen in die Poren und Einsaugen.

Daraus und aus ähnlichen Versuchen ist als Regel abzuleiten, daß eine gewisse Grundviskosität der Lösung, insbesondere über 300 mPas für eine ausreichende Porenüberbrückung erforderlich ist, jedenfalls bei Substrat B.

Kompaktere und/oder porenfreie Substrate, wie beispielsweise Substrat O ist damit auch ohne Verwendung eines Filmbildners beschichtbar.
- Substrat B: Teststufe -
- Substrat O: Teststufe 1

Die Kombination hydrophobes Bindemittel plus Weichmacher stellt eine Mindesterfordemis für eine verschlechterte Ausführung dar. Mit Lösungen des Bindemittels allein sind keine stabilen, nicht spröden Schichten erzielbar.

### Vergleichsbeispiel 10:

Innenbeschichtung eines Bechers (Substrat B) mittels Schleudertechnik

Beschichtungslösung:

| | |
|---|---|
| Ethylcellulose (1) | 13,5 g |
| Schellack (2) | 2,7 g |
| Triglyceride (3) | 3,8 g |
| Ethanol | 75,0 ml |
| Aceton | 5,0 ml |

| | |
|---|---|
| (1) Type N7 (Hercules) | |
| (2) Type 101 (MHP) | |
| (3) Type Delios S (Grünau) | |

Die Komponenten werden zu einer homogenen Lösung bereitet (Raumtemperatur). Den Becher in eine axial drehbare Halterung einspannen und mit 900 Umdrehungen pro Minute (Upm) drehen.

Einige ml der Lösung in die Bodenmitte des rotierenden Bechers dosieren. Nach 25 sec. die Rotationsgeschwindigkeit auf 300 Upm reduzieren und 45 sec. lang durch Einblasen eines Luftstromes bei Raumtemperatur abtrocknen lassen. Je nach Siedepunkt des Lösungsmittels beträgt diese Zeitspanne 30 bis 120 Sekunden.

Beschichtungsgewicht nach Abtrocknen und Feuchteausgleich:

| | |
|---|---|
| | 0,35 g Teststufe 1 |
| zweimaliger Auftrag: | 0,60 g Teststufe 2 |

### Beispiel 11:

Innenbeschichtung eines Bechers (Substrat E) mittels Schleudertechnik

Beschichtungslösung:

| | |
|---|---|
| Ethylcellulose (1) | 15 |
| Kolophonium, hydriert (2) | 6 |
| Epoxid. Sojaöl (3) | 4 |
| Ethanol | 50 |
| Aceton | 25 |

| | |
|---|---|
| (1) Type N7 (Hercules) | |
| (2) Type Foral AX (Hercules) | |
| (3) Type Relifier B 160 (Grindsted) | |

Beschichtungsausführung wie im vorgehenden Beispiel 10.

| | |
|---|---|
| Beschichtungsgewicht: | 0,5 g Teststufe 2 |
| zweimaliger Auftrag: | 0,85 g Teststufe 3 |

### Vergleichsbeispiel 12:

Innenbeschichtung eines Bechers (Substrat E) im Sprühverfahren

Beschichtungslösung:

| | |
|---|---|
| Ethylcellulose (1) | 10 |
| Schellack (2) | 3 |
| Ricinusöl | 3 |
| Ethanol | 84 |

| | |
|---|---|
| (1) Type N7 (Hercules) | |
| (2) Type 101 (MHP) | |

Der Becher wird auf eine in achsialer Richtung rotationsfähige Halterung gesetzt und auf 200 Upm eingestellt. Mittels einer Lackierpistole (Düse 3 mm, 1 bar) wird für ca. 3 sec. in einem Winkel von 45 ° zum Becherboden die Innenseite und der Becherrand besprüht, der Overspray durch Absaugen abgeführt und anschließend durch Einblasen von Luft ca. 1 min. bei Raumtemperatur getrocknet.

Beschichtungsgewicht: 0,4 g Teststufe 1

### Vergleichsbeispiel 13:

Beschichtung der Oberseite von Tassen (Substrate G, J) im Durchlauf-Sprühverfahren

Beschichtungslösung:

| | |
|---|---|
| Ethylcellulose (1) | 10 |
| Schellack (2) | 3 |
| Ricinusöl | 3 |
| Ethanol | 84 |

| | |
|---|---|
| (1) Type N7 (Hercules) | |
| (2) Type 101 (MHP) | |

Die Tassen werden mit dünnen Metallklammern an einem mittels Kettenzug translatorisch bewegbaren Gestänge fixiert und so durch eine Spritzkabine geführt. Das Besprühen erfolgt über zwei gegenüberliegende, seitlich versetzte Düsen, Neigungswinkel 60 °. Im unmittelbar folgenden Abluft-Tunnel wird bei ca. 40 °C in maximal 2 Minuten ein grifftrockener, stapelfähiger Zustand erreicht.

Beschichtungsgewicht:

| | |
|---|---|
| Substrat G | 0,7 g Teststufe 1 |
| Substrat J | 0,3 g Teststufe 1 |

### Vergleichsbeispiel 14:

Beschichtung der Oberseite von Tassen (Substrat J) mittels Walzenauftragung

Beschichtungslösung: Viskosität 375 mPas

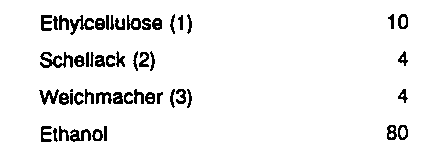

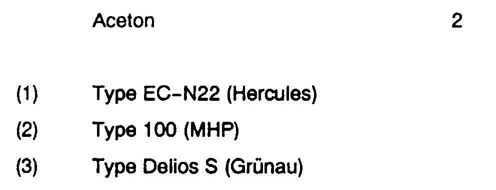

Die Auftragung erfolgt manuell mittels Schaumstoff-Lackwalze. Zweifachauftragung mit 30 sec. Zwischenablüftung.

Beschichtungsgewicht: 0,90 g Teststufe 1

### Vergleichsbeispiel 15:

### 1. Beschichtung der Oberseite von Tassen mittels Sprühauftrag (Substrate G, H, I, J, P, Q)

Beschichtungslösung: wie Beispiel 6, Formulierung 3.7.

Die Tassen werden mit dünnen Metallklammern an einem mittels Kettenzug translatorisch bewegbaren Gestänge fixiert und so durch eine Spritzkabine geführt. Das Besprühen erfolgt über zwei gegenüberliegende, seitlich versetzte Düsen, Neigungswinkel 60°. Im unmittelbar folgenden Abluft-Tunnel wird bei ca. 40°C in maximal 2 Minuten ein grifftrockener, stapelfähiger Zustand erreicht.

Beschichtungsgewicht: 0,4 g/dm²

Ergebnis: Teststufe 1 bestanden

### 2. Beschichtung von rechteckigen Schalen mittels Sprühauftrag (Substrate M, R)

Innenbeschichtung durch sequentielles zweimaliges Besprühen mit zwischenzeitlichen Ablüften bei 30°C; Der Boden der Schale ist stärker beschichtet als die Seitenränder.

Beschichtungsgewicht (bestimmt durch Rückkonditionieren): 0,65 g

Ergebnis: Teststufe 1 bestanden

## Patentansprüche

1. Verfahren zum mindestens einseitigen bzw. innenseitigen wasserdichten Beschichten von Formkörpern, die durch Backen zwischen zwei Formhälften oder durch Extrudieren von stärkehaltigen Massen erhalten werden, dadurch gekennzeichnet, daß gleichzeitig mit dem Aufbringen eines Lackes, der neben einem oder mehreren human- und/oder ökotoxikologisch unbedenklichen, mit Wasser mischbaren, unter 100°C siedenden Lösungsmitteln aus der Gruppe der Alkohole, Ketone und Ester ein oder mehrere verrottbare hydrophobe filmbildende Stoffe, nämlich hydrophobe Alkylcellulosen, hydrophobe, nicht wasserlösliche Celluloseester aus der Gruppe Celluloseacetatbutyrate, Celluloseacetatpropionate und Celluloseacetate, ein oder mehrere verrottbare hydrophobe Weichmacher, nämlich hydrophobe Triglyceride mittel- und langkettiger Fettsäuren mit einer Kettenlänge größer als oder gleich C4, Triglyceride mit kürzerkettiger Teilsubstitution, wenn zumindest eine Fettsäure mit einer Kettenlänge größer als oder gleich C14 enthalten ist, Phthalsäureester, acyclische Dicarbonsäureester, vollveresterte Citronensäureester, Saccharoseacetatisobutyrat und andere hydrophobe Zuckerester und gegebenenfalls ein oder mehrere verrottbare hydrophobe Bindemittel aus der Gruppe Kolophonium, Kopal, Mastix, Sandarak, hydrierte di- und polymerisierte Harze auf Kolophoniumbasis und aliphatische Kohlenwasserstoffharze enthält, wobei die Komponenten wasserunlöslich und für sich nicht dispergierbar bzw. emulgierbar in Wasser sind und kein Schellack enthalten, aus der Oberflächenschicht des zu beschichtenden Formkörpers das adsorbierte Hydratwasser zumindest teilweise entfernt wird, worauf das Lösungsmittel(gemisch) unter Aufrechterhaltung eines Mindestfeuchtigkeitsgehaltes des Substrates von 5 Gew.-% bis Geruchsfreiheit entfernt wird.

2. Verfahren nach Anspruch 1, dadurch gekennzeichnet, daß der Lack als Lösungsmittel ein oder mehrere unter 80°C siedende Lösungsmittel enthält.

3. Verfahren nach Anspruch 1 od. 2, dadurch gekennzeichnet, daß das Gewichtsverhältnis Lösungsmittelanteil zu Schichtkomponentenanteil des eingesetzten Lackes zwischen 1,5 und 17 liegt.

4. Verfahren nach einem oder mehreren der Ansprüche 1 bis 3, dadurch gekennzeichnet, daß die Beschichtung eine Dicke von 15 bis 150 µm aufweist.

5. Verfahren nach Anspruch 4, dadurch gekennzeichnet, daß die Beschichtung eine Dicke von 40 bis 150 µm aufweist.

## Claims

1. A process of applying a watertight coating to at least one side or the interior side of shaped articles produced by baking between two mold halves or by extruding starch-containing compositions, characterized in that simultaneously with the application of a lacquer which, in addition to one or more solvents miscible with water, boiling below a temperature of 100°C, toxicologically innocuous to human beings and to the environment and selected from the group consisting of alcohols, ketones and esters, contains one or more decomposable and hydrophobic film-forming substances, namely hydrophobic alkyl celluloses, hydrophobic, water-insoluble cellulose esters of the group consisting of cellulose acetate butyrates, cellulose acetate propionates and cellulose acetates, one or more decomposable and hydrophobic plasticizers, namely hydrophobic triglycerides of medium- or long-chain fatty acids having a chain length larger than or equal to C4, triglycerides with a short-chain partial substitution, if at least one fatty acid has a chain length larger than or equal to C14, phthalic acid esters, acyclic dicarboxylic acid esters, fully esterified citric acid esters, saccharose acetate isobutyrate and other hydrophobic sugar esters and, optionally, one or more decomposable hydrophobic binders of the group consisting of rosin, copal, mastic, gum sandarac, hydrogenated di- and polymerized rosin-based resins and aliphatic hydrocarbon resins, the components being water-insoluble and per se not dispersible or emulsifiable in water and not comprising shellac, the adsorbed water of hydration is at least partially removed from the surface layer of the shaped element to be coated, whereafter the solvent (solvent mixture) is removed to the point of absence of odor while maintaining a moisture content of the substrate of at least 5% by weight.

2. The process according to claim 1, characterized in that the lacquer contains one or more solvents boiling below 80°C.

3. The process of claim 1 or 2, characterized in that the weight ratio of the solvent part to the coating layer part of the lacquer is between 1.5 and 17.

4. The process of one or more of the claims 1 to 3, characterized in that the coating has a thickness of 15 to 150 µm.

5. The process of claim 4, characterized in that the coating has a thickness of 40 to 150 µm.

## Revendications

1. Procédé pour l'application d'une couche repoussant l'eau ou imperméable à l'eau à au moins un côté, à savoir la face intérieure de produits moulés qui sont obtenus par cuisson de masses contenant de l'amidon obtenues entre les deux moitiés d'un moule ou par extrusion, caractérisé en ce que l'on utilise, en même temps pour l'application d'une laque, en plus d'un ou plusieurs agents solvants humainement et / ou écotoxicologiquement acceptables, miscibles à l'eau, dont le point d'ébullition est inférieur à 100° C, choisis dans le groupe constitué par les alcools, les cétones et les esters, une ou plusieurs substances filmogènes hydrophobes biodégradables, à savoir des alkylcelluloses hydrophobes, des esters cellulosiques hydrophobes non solubles dans l'eau choisis dans le groupe constitué par les acétobutyrates de cellulose, les acétopropionates de cellulose et les acétates de cellulose, un ou plusieurs amollissants hydrophobes biodégradables, à savoir des triglycérides d'acides gras à chaîne moyenne ou longue ayant une longueur de chaîne supérieure ou égale à C4, des triglycérides partiellement substitués par des chaînes courtes dans le cas d'au moins un acide gras ayant une longueur de chaîne supérieure ou égale à C14, les esters de l'acide phtalique, les esters d'acides dicarboxyliques acycliques, les esters de l'acide citrique totalement estérifié, l'acéto-iso-butyrate de saccharose et les autres esters de sucres hydrophobes et, le cas échéant, un ou plusieurs liants hydrophobes biodégradables choisis dans le groupe constitué par la colophane, le copahl, le mastic, la gomme sandaraque, les résines di- et polymérisées hydratées à base de colophane et les résines d'hydrocarbures aliphatiques, les composants étant insolubles dans l'eau et individuellement non dispersables ou dispersables dans l'eau, et ne contenant pas de gomme - laque, l'eau d'hydratation adsorbée étant au moins partiellement éliminée de la couche superficielle du produit moulé à recouvrir, de manière telle que l'agent solvant (ou le mélange d'agents solvants), par maintien d'une teneur en humidité minimale du substrat, est éliminé entre 5 % en poids et une absence complète d'odeur.

2. Procédé selon la revendication 1, caractérisé en ce que la laque contient comme agent solvant un ou plusieurs agents solvants dont le point d'ébullition est inférieur à 80° C.

3. Procédé selon la revendication 1 ou 2, caractérisé en ce que la proportion de la portion constituant l'agent solvant et la proportion constituant les composants de la couche de la laque déposée est comprise entre 1,5 et 17.

4. Procédé selon l'une ou plusieurs des revendications 1 à 3, caractérisé en ce que la couche a une épaisseur de 15 à 150 µm.

5. Procédé selon la revendication 4, caractérisé en ce que la couche a une épaisseur de 40 à 150 µm.
